# EUROPÄISCHE PATENTSCHRIFT

(11) **EP 1 874 588 B1**
(45) Veröffentlichungstag und Bekanntmachung des Hinweises auf die Patenterteilung: **03.09.2008**
(21) Anmeldenummer: 06707421.1
(22) Anmeldetag: 04.03.2006
(51) Int. Cl.: B60R 16/02, B60G 11/00

(54) **VORRICHTUNG ZUR LEITUNGSFÜHRUNG IN EINEM KRAFTFAHRZEUG**
DEVICE FOR GUIDING LINES IN A MOTOR VEHICLE
DISPOSITIF DE CABLAGE DANS UNE AUTOMOBILE

(30) Priorität: 22.04.2005 DE 102005018993
(43) Veröffentlichungstag der Anmeldung: 09.01.2008
(73) Patentinhaber: Volkswagen Aktiengesellschaft, 38436 Wolfsburg (DE)
(72) Erfinder: DÖRING, Bernd, 38518 Gifhorn (DE); MILKE, Ralf, 38173 Erkerode (DE); IMHOFF, Martin, 38446 Wolfsburg (DE)
(86) Internationale Anmeldenummer: PCT/EP2006/001997
(87) Internationale Veröffentlichungsnummer: WO 2006/114150

(56) Entgegenhaltungen:
- FR-A- 2 819 948
- FR-A- 2 839 587
- US-A- 4 696 523
- US-A- 5 466 036
- US-B1- 6 303 869

## Beschreibung

Die Erfindung betrifft eine Vorrichtung zur Leitungsführung in einem Kraftfahrzeug mit einer karosserieseitig angelenkten Abdeckung für eine Kraftfahrzeugöffnung, insbesondere einem Heckdeckel, wobei zum Anschluss von in der Abdeckung angeordneten Baugruppen mindestens eine Leitung vorgesehen ist, welche einen veränderlichen Abstand zwischen einem Karosserieteil und der Abdeckung überbrückt, die Abdeckung zwischen einer ersten und einer zweiten Endlage bewegbar ist, wobei die mindestens eine Leitung karosserieseitig und/oder abdeckseitig verschoben wird.

Aus der deutschen Patentschrift DE 29 30 241 C2 ist eine Vorrichtung zur Führung eines elektrischen Kabelstranges zwischen zwei gegeneinander beweglichen Teilen, insbesondere gegeneinander verfahrbaren Karosserieteilen eines Fahrzeuges bekannt, bei dem der Kabelstrang mit einem Gliederfaltband geführt wird. Die einzelnen Tragglieder des Gliederfaltbandes sind mit Durchfädelöffnungen für den Kabelstrang versehen, der im Übergang zwischen gestreckt aufeinander folgenden Traggliedern eine freie Schlaufe mit großem Radius bildet.

In der deutschen Offenlegungsschrift DE 102 04 597 A1 wird eine Führungseinrichtung für eine Leitung oder einen Leitungsstrang zwischen zwei zueinander bewegbaren Fahrzeugbauteilen zur Überbrückung eines veränderbaren Abstandes zwischen den Fahrzeugbauteilen vorgeschlagen, bei der zur Führung der Leitung zwischen den Fahrzeugbauteilen ein formstabiles, biegbares Führungsrohr vorgesehen ist. Zusätzlich weist die Führungseinrichtung eine Halterung für das Führungsrohr zur Anordnung an einem der Fahrzeugteile und einer an dem anderen Fahrzeugteil anordbaren und eine axiale Verschiebung des Führungsrohres ermöglichenden Führungsaufnahme auf. Dabei ist diese so gestaltet, dass das als kabelführende Verbindung zwischen den Fahrzeugbauteilen dienende Führungsrohr auch bei einem maximalen Abstand zwischen den Fahrzeugteilen noch definiert geführt wird.

In der europäischen Patentanmeldung EP 873 912 A2 ist eine Leitungsführung mit einer Rückzugseinrichtung für ein Kraftfahrzeug mit einer karosseriekörperseitig angelenkten Abdeckung beschrieben, die eine Leitung unter Mitwirkung der auf diese ausgeübten Rückzugskraft entlang einer Ideallinie durch eine Öffnung im Karosseriekörper zu einer Öffnung in der Abdeckung führt.

US 4 696 523 beschreibt also eine Vorrichtung gemäß dem Oberbegriff des Anspruchs 1.

Die Aufgabe der Erfindung ist es, eine Vorrichtung zur Leitungsführung in einem Kraftfahrzeug mit einer karosserieseitig angelenkten Abdeckung für eine Kraftfahrzeugöffnung, bei der zum Anschluss von in der Abdeckung angeordneten Baugruppen mindestens eine elektrische oder fluid- oder gasführende Leitung vorgesehen ist, welche einen veränderlichen Abstand zwischen einem Karosserieteil und der Abdeckung überbrückt, zu schaffen, mittels derer die mindestens eine Leitung mit einfachen Mitteln definiert geführt und geschützt wird.

Die Aufgabe wird durch die Merkmale des Patentanspruchs 1 gelöst. Vorteilhafte Aus- und Weiterbildungen sind in den Unteransprüchen dargestellt.

Gemäß der Erfindung ist zumindest im Bereich des Teils der mindestens einen Leitung, der den Abstand zwischen dem Karosserieteil und der Abdeckung in der zweiten Endlage der Abdeckung überbrückt, wenn die Abdeckung die Kraftfahrzeugöffnung nicht verschließt, also der Abstand seine größte Länge aufweist, ein lang gestrecktes Führungselement, beispielsweise ein Führungsstab an der mindestens einen Leitung angeordnet. Nach einer vorteilhaften Ausgestaltung der Erfindung ist das lang gestreckte Führungselement zumindest im Bereich eines seiner Enden oder an mindestens einem Ende mit der mindestens einen Leitung fest, das heißt axial gegenüber der mindestens einen Leitung nicht verschiebbar befestigt. Es ist jedoch auch denkbar, dass die Befestigung an beiden Enden oder im Bereich beider Enden erfolgt.

Das biegefähige lang gestreckte Führungselement ist dabei in Abhängigkeit des Materials des Führungselementes derart ausgebildet, dass ein zulässiger Biegewinkel der mindestens einen Leitung während der Bewegung der Abdeckung zwischen der ersten und zweiten Endlage und/oder in den Endlagen der Abdeckung nicht unterschritten wird, so dass ein Knicken und eine damit einhergehende Beschädigung der mindestens einen Leitung vermieden wird. Vorzugsweise liegt das Elastizitätsmodul des lang gestreckten Führungselementes zwischen 10 MPa und 150 GPa. Der Durchmesser des Führungselementes liegt gemäß einer vorteilhaften Ausführung zwischen 1,2 mm und 10,0 mm.

Nach einer Ausbildung der Erfindung besteht das lang gestreckte Führungselement aus Glasfasern mit einem Trägermaterial (Matrix) aus duroplastischen oder thermoplastischen Polymeren, insbesondere aus Polyethylen. Andere Materialien sind denkbar.

In einigen Fällen, in denen mindestens eine elektrische Leitung in die Abdeckung geführt wird, wird neben der elektrischen Leitung auch eine fluidführende Leitung, beispielsweise eine Waschwasserleitung, in die Abdeckung geführt. In diesen Fällen kann gegebenenfalls auf ein zusätzliches Führungselement verzichtet werden und dafür die Waschwasserleitung materialmäßig und in ihren Abmaßen so ausgebildet werden, dass sie das lang gestreckte Führungselement ersetzt. Es kann aber auch ein zusätzliches lang gestrecktes Führungselement vorgesehen sein.

Zur stabilen Führung der mindestens einen Leitung ist nach einer Ausbildung der Erfindung das lang gestreckte Führungselement an die mindestens eine Leitung angewickelt. Nach einer anderen Ausbildung der Erfindung, wenn mehrere Leitungen in die Abdeckung geführt werden, kann das lang gestreckte Führungselement auch in den damit gebildeten Leitungsstrang eingewickelt sein.

Nach einer weiteren Ausbildung der Erfindung ist die mindestens eine Leitung mit dem lang gestreckten Führungselement zwischen dem Karosserieteil und der Abdeckung in einem Dichtungsbalg, insbesondere einem Faltenbalg aus elastischem Material geführt. Zur dichtenden Befestigung an dem Karosserieteil weist der Dichtungsbalg eine erste Befestigungseinrichtung und zur dichtenden Befestigung an der Abdeckung eine zweite Befestigungsanordnung auf. Bevorzugt ist die mindestens eine Leitung und/oder das lang gestreckte Führungselement zumindest axial fest mit der zweiten Befestigungseinrichtung verbunden.

Eine weitere Ausbildung der Erfindung sieht vor, dass die mindestens eine Leitung und das lang gestreckte Führungselement karosserieseitig und/oder abdeckungsseitig in einer Führungseinrichtung, vorzugsweise in einer rohrförmigen Führung geführt ist. Vorzugsweise erfolgt die Führung der mindestens einen Leitung und/oder des lang gestreckten Führungselementes in Abhängigkeit, ob die mindestens eine Leitung karosserieseitig oder abdeckungsseitig verschoben wird. Die Führungseinrichtung kann dabei fest mit der jeweiligen Befestigungseinrichtung verbunden sein.

Nachfolgend wird die Erfindung anhand eines Ausführungsbeispiels näher beschrieben. Zugehörige Zeichnungen zeigen:
- Fig.: 1 eine schematische Darstellung der Leitungsführung in der ersten Endlage, beispielsweise bei geschlossenen Heckdeckel und

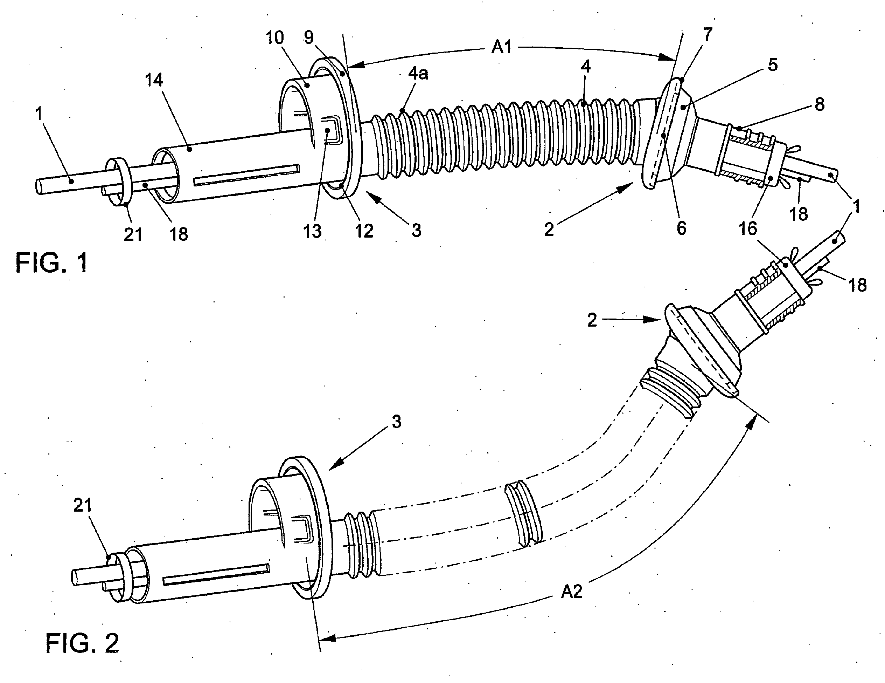

- Fig. 2: eine schematische Darstellung der Leitungsführung in der zweiten Endlage, beispielsweise bei geöffneten Heckdeckel.

Die Figur 1 zeigt eine dargestellte Vorrichtung zur Führung mindestens einer Leitung 1, beispielsweise mindestens einer elektrischen und/oder fluid- und/oder gasführenden Leitung 1zwischen einer nicht dargestellten Karosserie eines Fahrzeuges und einer nicht dargestellten Abdeckung für eine Öffnung in der Karosserie, beispielsweise einem Heckdeckel, zum Anschluss von in dem Heckdeckel angeordneten Baugruppen, beispielsweise Leuchten, Scheibenreinigungseinrichtungen, elektrischen Schlössern etc. Zu diesem Zwecke überbrückt die mindestens eine Leitung 1 einen veränderlichen Abstand A zwischen der karosserieseitigen Leitungsdurchführung und der heckdeckelseitigen Leitungsdurchführung. Die Veränderung des Abstandes resultiert dabei aus der Bewegung des Heckdeckels zwischen den beiden Endlagen bei geschlossener Karosserieöffnung und bei geöffneten Heckdeckel. Bei der Darstellung in Fig. 1 ist der Heckdeckel geschlossen.

Die Vorrichtung gemäß dem Ausführungsbeispiel besteht aus einem gummielastischen Faltenbalg 4 mit Falten 4a, der zwischen der Karosserie des Fahrzeuges einerseits und dem Heckdeckel anderseits angeordnet ist und in dem die Leitung 1 geführt ist. Der Faltenbalg weist an seinen Enden Befestigungseinrichtungen 2,3 zur dichtenden Anordnung an der Fahrzeugkarosserie und der Heckklappe auf. Die Befestigungseinrichtung 2 zur Anordnung im Scharnierbereich der Heckklappe besteht aus einem konischen Stopfen 5, an dem faltenbalgseitig eine in gestrichelten Linien angedeutete konzentrische Nut 6 und eine konzentrische Dichtlippe 7 zum Einknöpfen (6) in die jeweilige Öffnung und zur dichtenden Anlage (7) am Rand derselben und an den (5) sich auf der dem Faltenbalg 4 abgewandten Seite ein hohlzylindrischer Fortsatz 8 anschließt, über den die Befestigungseinrichtung 2 und damit der Faltenbalg 4 mit der mindestens Leitung 1 und dem später näher zu beschreibenden lang gestreckten Führungselement, beispielsweise einem Führungsstab 18, für die mindestens eine Leitung 1 zumindest in axialer Richtung der Leitung 1 fest verbindbar ist. Die Befestigungseinrichtung 3 zur dichtenden Befestigung des Faltenbalgs 4 an der Karosserie des Fahrzeuges ist aus einem an den Faltenbalg 4 angeformten ovalen tellerartigen Aufnahmeteil 9 und einem ovalen Rastrahmen 10 gebildet, wobei das Aufnahmeteil 9 einen am Rastrahmen 10 ausgebildeten Flansch dichtend umschließt und auf der dem Faltenbalg 4 abgewandten Seite mit einer Dichtlippe 12 zur Anlage an den die Öffnung in der Karosserie umgebenden Rand versehen ist.

Der Rastrahmen 10 weist umfangsseitig zwei gegenüberliegend ausgebildete Rastzungen 13, die im montierten Zustand den Rand der Öffnung in der Karosserie hintergreifen und die Befestigungsvorrichtung 3 festlegen, und ein hohlzylindrisches Führungsrohr 14 auf, in dem der Teil der mindestens einen Leitung 1, der karosserieseitig beim Schließen des Heckdeckels verschoben wird, geführt wird.

Wie in den Fig. 1 und 2 gezeigt ist, überbrückt die mindestens eine Leitung 1 bei geschlossenem Heckdeckel (Fig.1) einen minimalen Abstand A1 und bei vollständig geöffneten Heckdeckel einen maximalen Abstand A2 zwischen der Karosserie und dem Heckdeckel. Insbesondere beim Schließen des Heckels ist zu gewährleisten, dass die mindestens eine Leitung 1 zurückgeführt wird, dass ein Knicken, Quetschen und damit verbundenes Beschädigen der mindestens einen Leitung 1 vermieden und die Leitung 1 definiert geführt wird. Aus diesem Grund ist zumindest im Bereich des Teils der mindestens einen Leitung 1, der den veränderlichen Abstand A zwischen der Karosserie und dem Heckdeckel überbrückt, ein biegeelastischer Führungsstab 18 an der mindestens einen Leitung 1 angeordnet, der so ausgebildet ist, dass ein zulässiger Biegewinkel der mindestens einen Leitung 1 während der Bewegung des Heckdeckels zwischen der ersten und zweiten Endlage nicht unterschritten wird. Der Führungsstab 18 ist entweder an die mindestens eine Leitung 1 axial erstreckend angewickelt oder in einen aus mehreren Leitungen 1 gebildeten Leitungsstrang 1 eingewickelt. Die mindestens eine Leitung 1 und der biegeelastische Führungsstab können gemäß dem Ausführungsbeispiel zumindest im Bereich des veränderlichen Abstandes A auch von einer Ummantelung umgeben sein, die eine Oberfläche mit einer verbesserten Gleitfähigkeit aufweisen kann.

Gemäß dem Ausführungsbeispiel ist der Führungsstab 18 gemeinsam mit der mindestens einen Leitung 1 über die Befestigungseinrichtung 16 fest mit dem hohlzylindrischen Fortsatz 8 der Befestigungseinrichtung 2 verbunden und axial zur Leitung 1 festgelegt. Karosserieseitig erfolgt die axiale Festlegung des Führungsstabes 18 nur an der mindestens einen Leitung 1 über den axial festgelegten Anschlag 21 für das Führungsrohr 14. Andere Befestigungsarten und - varianten sind denkbar.

Nach dem Ausführungsbeispiel weist der Führungsstab als Parameter ein Elastizitätsmodul im Bereich von 10 MPa bis 150 GPa auf. Sein Durchmesser liegt im Bereich von 1,2 mm bis 10,0mm. Als Material des Führungsstabs eignen sich Glasfasern mit einer Matrix aus duroplastischen oder thermoplastischen Polymeren, insbesondere Polyethylen.

## Patentansprüche

1. Vorrichtung zur Leitungsführung in einem Kraftfahrzeug mit einer karosserieseitig angelenkten Abdeckung für eine Kraftfahrzeugöffnung, die Vorrichtung ist für ein Heckdeckel, wobei zum Anschluss von in der Abdeckung angeordneten Baugruppen mindestens eine Leitung (1) vorgesehen ist, welche hierzu einen veränderlichen Abstand zwischen einem ein oder mehrteiligen Karosserieteil und der Abdeckung überbrückt, die Abdeckung zwischen einer ersten und einer zweiten Endlage bewegbar ist, wobei die mindestens eine Leitung (1) karosserieseitig und/oder abdeckungsseitig verschoben wird, **dadurch gekennzeichnet, dass** zumindest im Bereich des Teils der mindestens einen Leitung (1), der den veränderlichen Abstand zwischen dem Karosserieteil und der Abdeckung überbrückt, ein lang gestrecktes Führungselement (18) an der mindestens einen Leitung (1) angeordnet ist.

2. Vorrichtung nach Anspruch 1, **dadurch gekennzeichnet, dass** das lang gestreckte Führungselement (18) zumindest im Bereich eines seiner Enden oder an mindestens einem Ende an der mindestens einen Leitung (1) axial festlegend befestigt ist.

3. Vorrichtung nach Anspruch 1 oder 2, **dadurch gekennzeichnet, dass** das Führungselement (18) derart ausgebildet ist, dass ein zulässiger Biegewinkel der mindestens einen Leitung (1) während der Bewegung der Abdeckung zwischen der ersten und zweiten Endlage und/oder in den Endlagen der Abdeckung nicht unterschritten wird.

4. Vorrichtung nach einem der Ansprüche 1 bis 3, **dadurch gekennzeichnet, dass** das Elastizitätsmodul des lang gestreckten Führungselementes (18) zwischen 10 MPa bis 150 GPa liegt.

5. Vorrichtung nach einem der Ansprüche 1 bis 4, **dadurch gekennzeichnet, dass** das Führungselement (18) einen Durchmesser im Bereich von 1,2 mm bis 10,0 mm aufweist.

6. Vorrichtung nach einem der Ansprüche 1 bis 5, **dadurch gekennzeichnet, dass** das lang gestreckte Führungselement (18)aus Glasfasern mit einem Trägermaterial aus duroplastischen oder thermoplastischen Polymeren, insbesondere aus Polyethylen, besteht.

7. Vorrichtung nach einem der Ansprüche 1 bis 6, **dadurch gekennzeichnet, dass** das lang gestreckte Führungselement (18) an die mindestens eine Leitung (1) angewickelt ist.

8. Vorrichtung nach einem der Ansprüche 1 bis 6, **dadurch gekennzeichnet, dass** mindestens zwei Leitungen (1), die einen Leitungsstrang bilden, vorgesehen sind und das lang gestreckte Führungselement (18) in den Leitungsstrang eingewickelt ist.

9. Vorrichtung nach einem der Ansprüche 1 bis 8, **dadurch gekennzeichnet, dass** die mindestens eine Leitung (1) mit dem lang gestreckten Führungselement (18) zwischen dem Karosserieteil und der Abdeckung in einem Dichtungsbalg, insbesondere einem Faltenbalg (4), geführt ist, der eine erste Befestigungseinrichtung (3) zur dichtenden Anordnung an dem Karosserieteil und eine zweite Befestigungseinrichtung (2) zur dichtenden Anordnung an der Abdeckung aufweist.

10. Vorrichtung nach Anspruch 9, **dadurch gekennzeichnet, dass** die mindestens eine Leitung (1) und/oder das lang gestreckte Führungselement (18) mit der zweiten Befestigungsanordnung (2) verbunden ist.

11. Vorrichtung nach einem der Ansprüche 1 bis 10, **dadurch gekennzeichnet, dass** die mindestens eine Leitung (1) und das lang gestreckte Führungselement (18) karosserieseitig und/oder abdeckungsseitig in einer Führungseinrichtung (14), vorzugsweise in einer rohrförmigen Führung, geführt ist.

## Claims

1. Device for guiding lines in a motor vehicle having a covering, which is coupled to the vehicle, for a motor vehicle opening, the device being intended for a tailgate, wherein, in order to connect subassemblies arranged in the covering, at least one line (1) is provided which, for this purpose, spans a variable distance between a single- or multi-part body part and the covering, and the covering can be moved between a first and a second end position, and wherein the at least one line (1) is displaced on the body and/or covering, **characterized in that** a longitudinally extending guide element (18) is arranged on the at least one line (1) at least in the region of that part of the at least one line (1) which spans the variable distance between the body part and the covering.

2. Device according to Claim 1, **characterized in that** the longitudinally extending guide element (18) is secured axially at least in the region of one of its ends or at at least one end to the at least one line (1)

3. Device according to Claim 1 or 2, **characterized in that** the guide element (18) is designed in such a manner that a permissible bending angle of the at least one line (1) is not fallen short of during the movement of the covering between the first and second end position and/or in the end positions of the covering.

4. Device according to one of Claims 1 to 3, **characterized in that** the modulus of elasticity of the longitudinally extending guide element (18) is between 10 MPa to 150 GPa.

5. Device according to one of Claims 1 to 4, **characterized in that** the guide element (18) has a diameter in the range of from 1.2 mm to 10.0 mm.

6. Device according to one of Claims 1 to 5, **characterized in that** the longitudinally extending guide element (18) is composed of glass fibres with a backing material made of thermosetting or thermoplastic polymers, in particular of polyethylene.

7. Device according to one of Claims 1 to 6, **characterized in that** the longitudinally extending guide element (18) is wound onto the at least one line (1).

8. Device according to one of Claims 1 to 6, **characterized in that** at least two lines (1) which form a strand of lines are provided, and the longitudinally extending guide element (18) is coiled into the strand of lines.

9. Device according to one of Claims 1 to 8, **characterized in that** the at least one line (1) with the longitudinally extending guide element (18) is guided between the body part and the covering in a sealing bellows, in particular an expansion bellows (4), which has a first fastening device (3) for the sealing arrangement on the body part and a second fastening device (2) for the sealing arrangement on the covering.

10. Device according to Claim 9, **characterized in that** the at least one line (1) and/or the longitudinally extending guide element (18) is/are connected to the second fastening arrangement (2).

11. Device according to one of Claims 1 to 10, **characterized in that** the at least one line (1) and the longitudinally extending guide element (18) are guided on the body and/or on the covering in a guide device (14), preferably in a tubular guide.

## Revendications

1. Dispositif pour guider des lignes dans un véhicule automobile, comprenant un recouvrement articulé du côté de la carrosserie, pour recouvrir une ouverture du véhicule automobile, ce dispositif étant prévu pour un hayon arrière, au moins une ligne (1) étant prévue pour relier des modules disposés dans le recouvrement et s'étendant à cet effet sur une distance variable entre une partie de la carrosserie en une ou plusieurs parties et le recouvrement, le recouvrement pouvant être déplacé entre une première et une deuxième position d'extrémité, l'au moins une ligne (1) étant déplacée du côté de la carrosserie et/ou du côté du recouvrement, **caractérisé en ce qu'**au moins dans la région de la partie de l'au moins une ligne (1) qui s'étend sur la distance variable entre la partie de la carrosserie et le recouvrement, on dispose un élément de guidage allongé (18) sur l'au moins une ligne (1).

2. Dispositif selon la revendication 1, **caractérisé en ce que** l'élément de guidage allongé (18) est fixé avec une fixation axiale au moins dans la région de l'une de ses extrémités ou à au moins une extrémité, à l'au moins une ligne (1).

3. Dispositif selon la revendication 1 ou 2, **caractérisé en ce que** l'élément de guidage (18) est réalisé de telle sorte que l'au moins une ligne (1) ne fléchisse pas au-delà d'un angle de flexion admissible pendant le déplacement du recouvrement entre la première et la deuxième position d'extrémité et/ou dans les positions d'extrémité du recouvrement.

4. Dispositif selon l'une quelconque des revendications 1 à 3, **caractérisé en ce que** le module d'élasticité de l'élément de guidage allongé (18) est compris entre 10 MPa et 150 GPa.

5. Dispositif selon l'une quelconque des revendications 1 à 4, **caractérisé en ce que** l'élément de guidage (18) présente un diamètre de l'ordre de 1,2 mm à 10,0 mm.

6. Dispositif selon l'une quelconque des revendications 1 à 5, **caractérisé en ce que** l'élément de guidage allongé (18) se compose de fibres de verre avec un matériau de support en polymères duroplastiques ou thermoplastiques, notamment en polyéthylène.

7. Dispositif selon l'une quelconque des revendications 1 à 6, **caractérisé en ce que** l'élément de guidage allongé (18) est enroulé sur l'au moins une ligne (1).

8. Dispositif selon l'une quelconque des revendications 1 à 6, **caractérisé en ce que** l'on prévoit au moins deux lignes (1), qui forment un segment de ligne, et **en ce que** l'élément de guidage allongé (18) est enroulé dans le segment de ligne.

9. Dispositif selon l'une quelconque des revendications 1 à 8, **caractérisé en ce que** l'au moins une ligne (1) est guidée avec l'élément de guidage allongé (18) entre la partie de carrosserie et le recouvrement dans un soufflet d'étanchéité, notamment un soufflet en accordéon (4), qui présente un premier dispositif de fixation (3) pour l'agencement étanche sur la partie de la carrosserie et un deuxième dispositif de fixation (2) pour l'agencement étanche sur le recouvrement.

10. Dispositif selon la revendication 9, **caractérisé en ce que** l'au moins une ligne (1) et/ou l'élément de guidage allongé (18) est connecté(e) au deuxième dispositif de fixation (2).

11. Dispositif selon l'une quelconque des revendications 1 à 10, **caractérisé en ce que** l'au moins une ligne (1) et l'élément de guidage allongé (18) sont guidés du côté de la carrosserie et/ou du côté du recouvrement dans un dispositif de guidage (14), de préférence dans un guide tubulaire.
